# EUROPEAN PATENT APPLICATION

(11) **EP 1 752 483 A1**
(43) Date of publication of application: **14.02.2007**
(21) Application number: 05816490.6
(22) Date of filing: 19.12.2005
(51) Int. Cl.: C08G 65/26, C08G 65/18, C08G 65/22, C08G 59/20

(54) **OXETANE COMPOUND AND HARDENABLE COMPOSITION CONTAINING THE SAME**

(30) Priority: 08.02.2005 JP 2005031988; 22.06.2005 JP 2005181969
(71) Applicant: THE YOKOHAMA RUBBER CO., LTD., Tokyo 105-8685 (JP)
(72) Inventor: HATANAKA, Kazuhiro, The Yokohama Rubber Co., LTD., Hiratsuka City, Kanagawa 2548601 (JP)
(74) Representative: Vossius & Partner
(86) International application number: PCT/JP2005/023271
(87) International publication number: WO 2006/085421

(57) **Abstract**

An object of the present invention is to provide a curable composition which: is excellent in reactivity, in particular, cationic polymerizability with respect to light and heat; and has good heat resistance. The object is carried out by an oxetane compound producible by a reaction between a silane compound having an epoxy group and an alkoxysilyl group, and a compound having an oxetane ring and an active hydrogen group.

## Description

### TECHNICAL FIELD

The present invention relates to an oxetane compound and a curable composition containing the same.

### BACKGROUND ART

An oxetane compound has been used in the field of an active energy ray-curable resin that is cured by ultraviolet light or an electron beam. The oxetane compound has an oxetane ring as a 4-membered cyclic ether, so the compound has a carbon-oxygen bond that is polarized more than that of a compound having an epoxy ring as a 3-membered cyclic ether (hereinafter referred to as the "epoxy compound"). As a result, the compound is known to show so high reactivity that a ring opening reaction progresses when a Lewis acid or the like is used as an initiator for cationic polymerization. In addition, the oxetane compound has an oxetane ring having a strain smaller than that of an epoxy ring, so the oxetane compound is more stable than the epoxy compound in terms of energy. As a result, an initiation reaction of the oxetane compound is known to be slower than that of the epoxy compound, but a growth reaction of the oxetane compound is known to be faster than that of the epoxy compound.

A large number of curable compositions each using such oxetane compound have been recently reported (see, for example, Patent Documents 1 to 7).
To be specific, Patent Documents 1 to 5 disclose resins each having an epoxy ring and an oxetane ring in one of its molecules and bringing together the properties of both the epoxy ring and the oxetane ring. However, those resins are each produced by radical polymerization, so each of them has a structure in which a functional group is provided for a side chain of a chain polymer (specifically, a resin the main chain of which is formed of a carbon-carbon bond). As a result, each of the resins has insufficient heat resistance, or is problematic in terms of processability, reactivity, coating workability, and the like.
In addition, Patent Document 6 discloses a silane coupling agent having an oxetane ring and a curable resin solution composition containing the silane coupling agent. Patent Document 7 discloses a polyfunctional oxetane compound having a silicon atom and a cationically curable composition containing the polyfunctional oxetane compound. However, each of those compounds is problematic in terms of reactivity.

Patent Document 1: JP 9-208674 A
Patent Document 2: JP 9-221625 A
Patent Document 3: JP 9-278866 A
Patent Document 4: JP 10-330652 A
Patent Document 5: JP 11-148045 A
Patent Document 6: JP 2001-329112 A
Patent Document 7: JP 2001-342194 A

### DISCLOSURE OF THE INVENTION

### PROBLEMS TO BE SOLVED BY THE INVENTION

In view of the foregoing, an object of the present invention is to provide a curable composition which: is excellent in reactivity, in particular, cationic polymerizability with respect to light and heat; and has good heat resistance.

### MEANS TO SOLVE THE PROBLEMS

The inventors of the present invention have made extensive studies with a view to achieving the above object. As a result, they have found that a curable composition using a specific oxetane compound such as an oxetane compound producible by a reaction between a specific silane compound having an epoxy group and an alkoxysilyl group and a specific compound having an oxetane ring and an active hydrogen group can be a curable composition which: is excellent in reactivity, in particular, cationic polymerizability with respect to light and heat; and has good heat resistance. Thus, the inventors have completed the present invention.

That is, the present invention provides an oxetane compound according to any one of the following items (1) to (5) and a curable composition according to any one of the following items (6) to (13).
(1) An oxetane compound producible by a reaction between a silane compound having an epoxy group and an alkoxysilyl group, and a compound having an oxetane ring and an active hydrogen group (which may hereinafter be referred to as the "active hydrogen group-containing oxetane compound").
(2) An oxetane compound producible by a reaction among a silane compound having an epoxy group and an alkoxysilyl group, a compound having an oxetane ring and an active hydrogen group, and a compound having an epoxy group and an active hydrogen group (which may hereinafter be referred to as the "active hydrogen group-containing epoxy compound").
(3) An oxetane compound producible by a reaction among a silane compound having an alkoxysilyl group, a compound having an oxetane ring and an active hydrogen group, and a compound having an epoxy group and an active hydrogen group.
(4) An oxetane compound producible by a reaction between a silane compound having an oxetane ring and an alkoxysilyl group, and a compound having an epoxy group and an active hydrogen group.
(5) An oxetane compound producible by a reaction among a silane compound having an oxetane ring and an alkoxysilyl group, a compound having an oxetane ring and an active hydrogen group, and a compound having an epoxy group and an active hydrogen group.
(6) A curable composition containing: at least one of the oxetane compounds according to any one of the above items (1) to (5); and a cationic polymerization initiator.
(7) The curable composition according to the above item (6), further containing a filler.
(8) The curable composition according to the above item (7), in which the filler is silica.
(9) The curable composition according to the above item (8), in which a content of the silica is 1 to 95 wt%.
(10) The curable composition according to any one of the above items (6) to (9), further containing an oxetane compound except the oxetane compound according to any one of the above items (1) to (5).
(11) The curable composition according to any one of the above items (6) to (10), further containing a vinyl ether compound.
(12) The curable composition according to any one of the above items (6) to (11), further containing an α,β unsaturated carbonyl compound.
(13) The curable composition according to any one of the above items (7) to (12), further containing an epoxy compound.

### EFFECTS OF THE INVENTION

As shown below, according to the present invention, there can be provided a curable composition which: is excellent in reactivity, in particular, cationic polymerizability with respect to light and heat; and has good heat resistance.
In addition, a curable composition containing the oxetane compound of the present invention is useful because of the following reasons. The curable composition is excellent in processability because the grain size of the curable composition can be controlled depending on the degree of condensation of a silane compound to be used. In addition, the composition eliminates the need for mixing an epoxy resin unlike the case where a conventional oxetane compound is used, and eliminates the need for taking workability, compatibility, and the like upon mixing into consideration. When the composition is mixed with an epoxy compound, even the reactivity of a general-purpose epoxy compound can be improved by using a filler in combination with the epoxy compound, and a viscosity can be adjusted depending on the amount of the filler.
Furthermore, the curable composition containing the oxetane compound of the present invention can be cured by either of heat and light. Accordingly, the composition is useful because it can find use in applications including: cured products of various heat- and photo-curable resins, specifically, fiber-reinforced composite materials, adhesives, sealing compounds, paints, coating agents, resins for stereo lithography, and the like; printed articles produced by using ink, toner, and the like; and sealants.

### BRIEF DESCRIPTION OF THE DRAWINGS

[FIG. 1] FIG. 1 is a chart of the ¹H-NMR (CDCl₃) spectrum of Oxetane compound 1 obtained in Example 1-1.
[FIG. 2] FIG. 2 is a photo DSC chart of each of compositions of Example 2 and Comparative Example 1.
[FIG. 3] FIG. 3 is a DSC chart of each of compositions of Example 3 and Comparative Example 2.
[FIG. 4] FIG. 4 is a photo DSC chart of each of compositions of Examples 4-1 to 4-4.
[FIG. 5] FIG. 5 is the spectrum of the storage elastic modulus of each of cured products of the compositions of Examples 4-2 to 4-4.

### BEST MODE FOR CARRYING OUT THE INVENTION

Hereinafter, the present invention will be described in more detail.
An oxetane compound according to a first aspect of the present invention is an oxetane compound producible by a reaction between a silane compound having an epoxy group and an alkoxysilyl group and an active hydrogen group-containing oxetane compound.
An oxetane compound according to a second aspect of the present invention is an oxetane compound producible by a reaction among a silane compound having an epoxy group and an alkoxysilyl group, an active hydrogen group-containing oxetane compound, and an active hydrogen group-containing epoxy compound.
An oxetane compound according to a third aspect of the present invention is an oxetane compound producible by a reaction among a silane compound having an alkoxysilyl group, an active hydrogen group-containing oxetane compound, and an active hydrogen group-containing epoxy compound.
An oxetane compound according to a fourth aspect of the present invention is an oxetane compound producible by a reaction between a silane compound having an oxetane ring and an alkoxysilyl group and an active hydrogen group-containing epoxy compound.
An oxetane compound according to a fifth aspect of the present invention is an oxetane compound producible by a reaction among a silane compound having an oxetane ring and an alkoxysilyl group, an active hydrogen group-containing oxetane compound, and an active hydrogen group-containing epoxy compound.
Hereinafter, a silane compound having an epoxy group and an alkoxysilyl group, a silane compound having an oxetane ring and an alkoxysilyl group, a silane compound having an alkoxysilyl group, an active hydrogen group-containing oxetane compound, and an active hydrogen group-containing epoxy compound will be described.

### <Silane compound having epoxy group and alkoxysilyl group>

The silane compound having an epoxy group and an alkoxysilyl group is not particularly limited, and an example of the compound is a compound having a crosslinkable silyl group and represented by the following general formula (1).

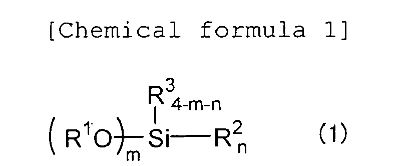

In the formula, m and n each independently represent an integer of 1 to 3 (provided that m + n ≤ 4).
R¹ represents an alkyl group having 1 to 3 carbon atoms, preferably represents a methyl group, an ethyl group, an n-propyl group, or an isopropyl group, or more preferably represents a methyl group or an ethyl group. When multiple R¹s are present, the multiple R¹s may be identical to or different from each other.
R² represents a monovalent organic group having an epoxy group, or preferably represents a group in which an epoxy group is bound to a silicon atom via an organic group which may contain a nitrogen atom or an oxygen atom (for example, a divalent, non-cyclic aliphatic group which has 2 to 6 carbon atoms and which may contain an oxygen atom, or a divalent, cyclic aliphatic group which has 6 to 10 carbon atoms and which may contain an oxygen atom). When multiple R²sare present, the multiple R²s may be identical to or different from each other.
R³ represents an alkyl group having 1 to 6 carbon atoms, preferably represents a methyl group, an ethyl group, an n-propyl group, or an isopropyl group, or more preferably represents a methyl group or an ethyl group. When multiple R³s are present, the multiple R³s may be identical to or different from each other.

Examples of such silane compound include: 3-glycidoxypropyltrialkoxysilanes or 3-glycidoxypropylalkyldialkoxysilanes such as 3-glycidoxypropyltrimethoxysilane, 3-glycidoxypropylmethyldimethoxysilane, 3-glycidoxypropylmethyldiethoxysilane, and 3-glycidoxypropyltriethoxysilane; and 2-(3,4-epoxycyclohexyl)ethyltrialkoxysilanes or 2-(3,4-epoxycyclohexyl)ethylalkyldialkoxysilanes such as 2-(3,4-epoxycyclohexyl)ethyltrimethoxysilane, 2-(3,4-epoxycyclohexyl)ethylmethyldimethoxysilane, 2-(3,4-epoxycyclohexyl)ethylmethyldiethoxysilane, and 2-(3,4-epoxycyclohexyl)ethyltriethoxysilane, and those condensates. Each of them may be used alone, or two or more of them may be used in combination.

The term "those condensates" as used herein refers to silane compounds each having an epoxy group and an alkoxysilyl group in a siloxane skeleton of chain-form, ladder-form or cage-form, or in a siloxane skeleton of mixture of these forms, and examples of the condensates include those obtained by condensing part of an alkoxysilyl group of 3-glycidoxypropyltrialkoxysilane.
In the present invention, such condensate can be obtained by condensing, for example, a compound represented by the general formula (1) through hydrolysis. However, a method of producing the condensate is not particularly limited to the foregoing, and the condensate may be synthesized by: forming a siloxane skeleton; and thereafter introducing a compound having an epoxy group and an alkoxysilyl group into the siloxane skeleton. In addition, the condensate may be one obtained through condensation using the above compound in combination with: a silane compound having a functional group such as a vinyl group, an acryl group, a methacryl group, or an isocyanate group in a molecule; or a tetraalkoxysilane such as tetramethoxysilane or tetraethoxysilane.
Alcohol is produced upon formation of a siloxane bond (-Si-O-) due to hydrolysis and a condensation reaction, so the alcohol is preferably removed under reduced pressure upon production of a condensate of a silane compound.

In those silane compounds mentioned as examples, 2-(3,4-epoxycyclohexyl)ethyltrimethoxysilane, 3-glycidoxypropyltrimethoxysilane, 3-glycidoxypropyltriethoxysilane, and 3-glycidoxypropylmethyldiethoxysilane are preferable because they are widely available.

In the present invention, a commercial product can be used as the silane compound; examples of a commercial product that can be used include 2-(3,4-epoxycyclohexyl)ethyltrimethoxysilane(A186, manufactured by Nippon Unicar Co.,Ltd.), 3-glycidoxypropyltrimethoxysilane (A187, manufactured by Nippon Unicar Co.,Ltd.), 3-glycidoxypropylmethyldiethoxysilane (KBE-402, manufactured by Shin-Etsu Chemical Co., Ltd), and 3-glycidoxypropyltriethoxysilane (KBE-403, manufactured by Shin-Etsu Chemical Co., Ltd.).

### <Silane compound having oxetane ring and alkoxysilyl group>

The silane compound having an oxetane ring and an alkoxysilyl group is not particularly limited, and an example of the compound is a compound having a crosslinkable silyl group and represented by the following general formula (1a).

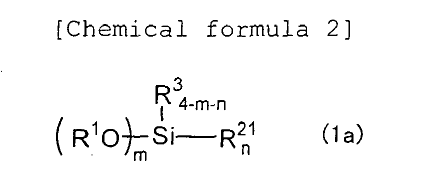

In the formula, m, n, R¹, and R³ each have the same meaning as that in the general formula (1).
R²¹ represents a monovalent organic group having an oxetane ring or preferably represents a group in which an oxetane ring is bound to a silicon atom via an organic group which may contain a nitrogen atom or an oxygen atom (for example, a divalent, non-cyclic aliphatic group which has 2 to 6 carbon atoms and which may contain an oxygen atom, or a divalent, cyclic aliphatic group which has 6 to 10 carbon atoms and which may contain an oxygen atom).

Examples of such silane compound include silane coupling agents each containing an oxetane ring described in Patent Document 6, and condensates of these agents. One of them may be used alone, or two or more of them may be used in combination.

The term "those condensates" as used herein refers to silane compounds each having an oxetane ring and an alkoxysilyl group in a siloxane skeleton of chain-form, ladder-form or cage-form, or in a siloxane skeleton of mixture of these forms, and examples of such condensates include those obtained by condensing part of an alkoxysilyl group of silane coupling agents each containing an oxetane ring described in Patent Document 6.
In the present invention, such condensate can be obtained by condensing, for example, a compound represented by the general formula (1a) through hydrolysis. However, a method of producing the condensate is not particularly limited to the foregoing, and the condensate may be synthesized by: forming a siloxane skeleton; and thereafter introducing a compound having an oxetane ring and an alkoxysilyl group into the siloxane skeleton. In addition, the condensate may be one obtained through condensation using the above compound in combination with: a silane compound having a functional group such as a vinyl group, an acryl group, a methacryl group, or an isocyanate group in a molecule; or a tetraalkoxysilane such as tetramethoxysilane or tetraethoxysilane.
Alcohol is produced upon formation of a siloxane bond (-Si-O-) due to hydrolysis and a condensation reaction, so the alcohol is preferably removed under reduced pressure upon production of a condensate of a silane compound.

### <Silane compound having alkoxysilyl group>

The silane compound having an alkoxysilyl group is not particularly limited as long as it does not have any one of an epoxy group and an oxetane ring, and an example of the compound is a compound having a crosslinkable silyl group and represented by the following general formula (1b).

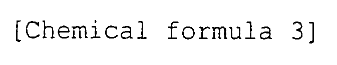

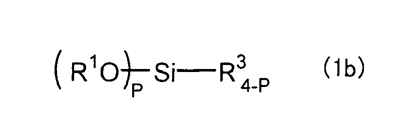

In the formula, p represents an integer of 2 to 4.
R¹ and R³ each have the same meaning as that in the general formula (1).

Examples of such silane compound include: tetraalkoxysilane such as tetramethoxysilane or tetraethoxysilane; and trialkoxyalkylsilane or trialkoxyallylsilane such as methyltriymethoxysilane, methyltriethoxysilane, phenyltrimethoxysilane, phenytriethoxysilane; and dialkoxydialkylsilane or dialkoxydiallylsilane such as dimethyldimethoxysilane, dimethyldiethoxysilane, diphenyldimethoxysilane, diphenyldiethoxysilane; and condensates thereof. Each of them may be used alone, or two or more of them may be used in combination.

The term "those condensates" as used herein refers to silane compounds in a siloxane skeleton of chain-form, ladder-form or cage-form, or in a siloxane skeleton of mixture of these forms, and examples of the condensates include those obtained by condensing part of an alkoxysilyl group of tetraalkoxysilane
In the present invention, such condensate can be obtained by condensing, for example, a compound represented by the general formula (1b) through hydrolysis. In addition, the condensate may be one obtained through condensation using the above compound in combination with: a silane compound having a functional group such as a vinyl group, an acryl group, a methacryl group, or an isocyanate group in a molecule.
Alcohol is produced upon formation of a siloxane bond (-Si-O-) due to hydrolysis and a condensation reaction, so the alcohol is preferably removed under reduced pressure upon production of a condensate of a silane compound.

Of those exemplified silane compounds, tetramethoxysilane and tetraethoxysilane are preferable because they are easily available.

In the present invention, a commercial product can be used as the silane compound, and examples of a commercial product that can be used include tetramethoxysilane (KBM-04, manufactured by Shin-Etsu Chemical Co., Ltd.) and tetraethoxysilane (KBE-04, manufactured by Shin-Etsu Chemical Co., Ltd.).

### <Active hydrogen group-containing oxetane compound>

The active hydrogen group-containing oxetane compound is not particularly limited as long as it is a compound having an oxetane ring and an active hydrogen group, and an example of the compound is a compound represented by the following general formula (2).

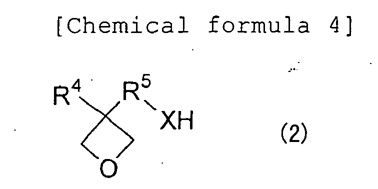

In this formula, R⁴ represents a hydrogen atom or an alkyl group having 1 to 6 carbon atoms. The alkyl group having 1 to 6 carbon atoms is preferable. Methyl group, ethyl group, n-propyl group, or isopropyl group is more preferable. Methyl group or ethyl group is much more preferable. R⁵ represents a single bond or divalent hydrocarbon radical having 1 to 16 carbon atoms which may contain a nitorogen or oxygen atom. The divalent hydrocarbon radical having 1 to 16 carbon atoms which may contain a nitrogen or oxygen atom is preferable. An alkylene group, which contains a nitrogen or oxygen atom, is more preferable. Examples preferably includes: methylene group, ethylene group, trimethylene group, propylene group, tetramethylene group, butylene group, pentamethylene group, hexamethylene group, octamethylene group, nonamethylene group, decamethylene group, undecamethylene group, dodecamethylene group, tridecamethylene group, tetradecamethylene group, pentadecamethylene group, and hexadecamethylene group. X represents a nitrogen atom, oxygen atom, or sulfur atom.

A suitable example of such active hydrogen group-containing oxetane compound is an oxetane alcohol because the alcohol can be easily reacted.

In the present invention, a commercial product can be used as the active hydrogen group-containing oxetane compound, and examples of a commercial product that can be used include 3-methy-3(-hydroxymethyl) oxetane (OXT-101, manufactured by Toagosei Co., Ltd.).

### <Active hydrogen group-containing epoxy compound>

The active hydrogen group-containing epoxy compound is not particularly limited as long as it is a compound having an epoxy group and an active hydrogen group, and examples of the compound include a compound represented by the following general formula (2a) and a compound represented by the following general formula (2b).

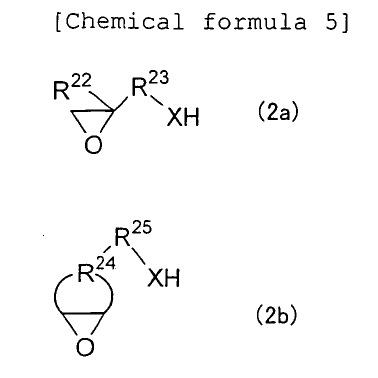

In the formulae, R²² has the same meaning as that of R⁴ in the general formula (2).
R²³ and R²⁵ each have the same meaning as that of R⁵ in the general formula (2).
R²⁴ represents a trivalent hydrocarbon group which has 2 or more carbon atoms and which may contain a nitrogen atom or an oxygen atom, or preferably represents a trivalent, straight-chain hydrocarbon group which has 2 or more carbon atoms and which may contain a nitrogen atom or an oxygen atom, and suitable examples of such group include trivalent groups each obtainable by removing one hydrogen atom from an alkylene group such as an ethylene group, a trimethylene group, a tetramethylene group, or a pentamethylene group. Of those, a trivalent group obtainable by removing one hydrogen atom on a carbon atom at 2-position of a tetramethylene group is preferable.
X has the same meaning as that in the general formula (2).

A suitable example of such active hydrogen group-containing epoxy compound is an epoxy alcohol because the alcohol can be easily reacted. Examples of the alcohol include: 2,3-epoxy-1-propanol (also referred to as glycidol); and 1,2-epoxy-4-hydroxymethyl-cyclohexane.

In the present invention, a commercial product can be used as the active hydrogen group-containing epoxy compound, and examples of a commercial product that can be used include 2,3-epoxy-1-propanol (GD, manufactured by Daicel Chemical Industries Co., Ltd.) and 1,2-epoxy-4-hydroxymethyl-cyclohexane (ETHB, manufactured by Daicel Chemical Industries Co., Ltd.).

The oxetane compound according to a first aspect of the present invention can be produced by reaction of the silane compound having an epoxy group and an alkoxysilyl group with the active hydrogen group-containing oxetane compound.
The oxetane compound according to a second aspect of the present invention can be produced by reaction among the silane compound having an epoxy group and an alkoxysilyl group, the active hydrogen group-containing oxetane compound, and the active hydrogen group-containing epoxy compound.
The oxetane compound according to a third aspect of the present invention can be produced by reaction among the silane compound having an alkoxysilyl group, the active hydrogen group-containing oxetane compound, and the active hydrogen group-containing epoxy compound.
The oxetane compound according to a fourth aspect of the present invention can be produced by reaction of the silane compound having an oxetane ring and an alkoxysilyl group with the active hydrogen group-containing epoxy compound.
The oxetane compound according to a fifth aspect of the present invention can be produced by reaction among the silane compound having an oxetane ring and an alkoxysilyl group, the active hydrogen group-containing oxetane compound, and the active hydrogen group-containing epoxy compound.

Those reactions are general condensation reactions, and conditions for the reactions are not particularly limited.
The oxetane compound according to the first aspect of the present invention can be produced by, for example, stirring the silane compound having an epoxy group and an alkoxysilyl group and the active hydrogen group-containing oxetane compound under reduced pressure at a temperature of 50 to 200°C.
To be specific, the silane compound represented by the general formula (1) and the active hydrogen group-containing oxetane compound represented by the general formula (2) are reacted with each other in such a manner that the amount of an alkoxy group of the silane compound is equivalent to that of an active hydrogen group of the active hydrogen group-containing oxetane compound as shown below. As a result, an oxetane compound represented by the following general formula (3) is produced. In the formula (3), m, n, R², R³, R⁴, and R⁵, respectively, have the same meanings as those in each of the general formulae (1) and (2). The silane compound represented by the general formula (1) may be a condensate obtained by condensing part of alkoxysilyl in advance.

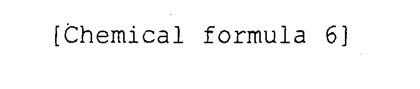

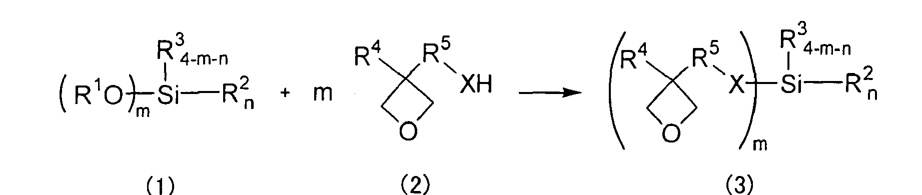

Examples of such oxetane compound include reaction products obtainable by reacting the respective silane compounds each having an epoxy group and an alkoxysilyl group with the respective active hydrogen group-containing oxetane compounds exemplified above. Of those, a suitable example is a reaction product between 2-(3,4-epoxycyclohexyl)ethyltrimethoxysilane and an oxetane alcohol (the following formula (4)).

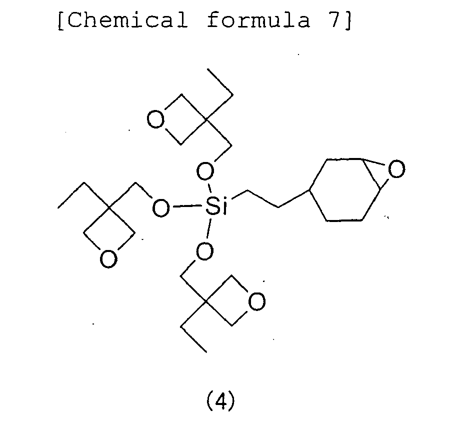

Each of the oxetane compounds according to the second to fifth aspects of the present invention can also be produced by, for example, stirring the above compounds serving as raw materials for each of the oxetane compounds under reduced pressure at a temperature of 50 to 200°C in the same manner as of the oxetane compound according to the first aspect of the present invention.
To be specific, in the case of the oxetane compound according to the second aspect of the present invention, a compound represented by the general formula (1), a compound represented by the general formula (2), and a compound represented by the general formula (2a) and/or a compound represented by the general formula (2b) are reacted with one another in such a manner that the amount of an alkoxy group is equivalent to that of an active hydrogen group as shown below. In the case of the oxetane compound according to the third aspect of the present invention, a compound represented by the general formula (1b), a compound represented by the general formula (2), a compound represented by the general formula (2a) and/or a compound represented by the general formula (2b) are reacted with one another in such a manner that the amount of an alkoxy group is equivalent to that of an active hydrogen group as shown below. In the case of the oxetane compound according to the fourth aspect of the present invention, a compound represented by the general formula (1a) and a compound represented by the general formula (2a) and/or a compound represented by the general formula (2b) are reacted with each other in such a manner that the amount of an alkoxy group is equivalent to that of an active hydrogen group as shown below. In the case of the oxetane compound according to the fifth aspect of the present invention, a compound represented by the general formula (1a), a compound represented by the general formula (2), a compound represented by the general formula (2a) and/or a compound represented by the general formula (2b) are reacted with one another in such a manner that the amount of an alkoxy group is equivalent to that of an active hydrogen group as shown below. As a result, respective oxetane compounds represented by the following general formulae (3a) to (3d) are produced (an aspect in which the compound represented by the general formula (2b) is used is omitted). In the formulae (3a) to (3d), the respective symbols each have the same meaning as that in each of the general formulae (1), (1a), (2), (2a), and (2b), and q represents an integer in the range of 1 to (m - 1) (both inclusive). Each of the compound represented by the general formula (1) and the compound represented by the general formula (1a) may be a condensate obtained by condensing part of alkoxysilyl in advance.

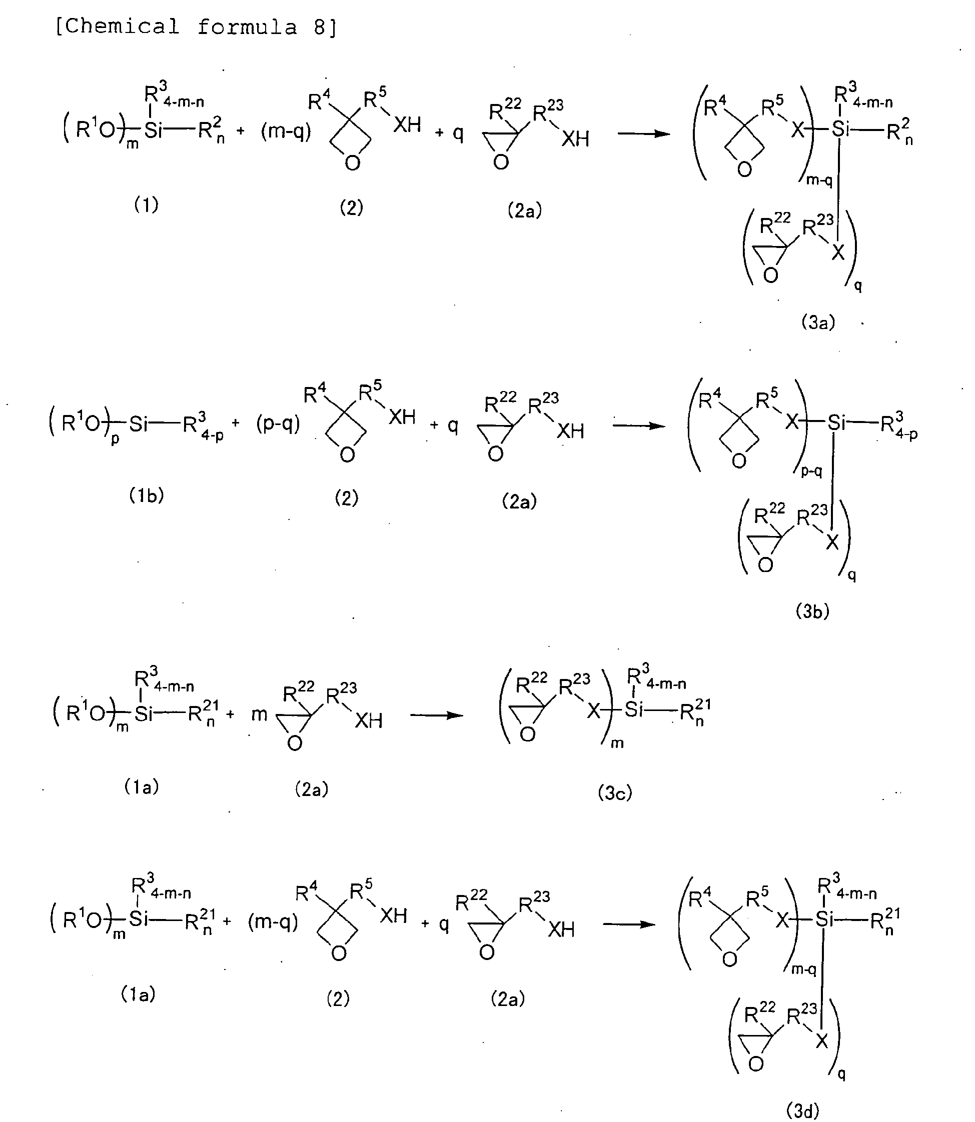

To be more specific, the oxetane compound according to the first aspect of the present invention represented by the following formula (4), the oxetane compound according to the second aspect of the present invention represented by each of the following general formulae (4a) and (4a'), and the oxetane compound according to the third aspect of the present invention represented by each of the following general formulae (4b) and (4b') can be obtained on the basis of the following respective reaction formulae.

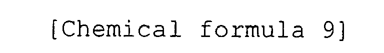

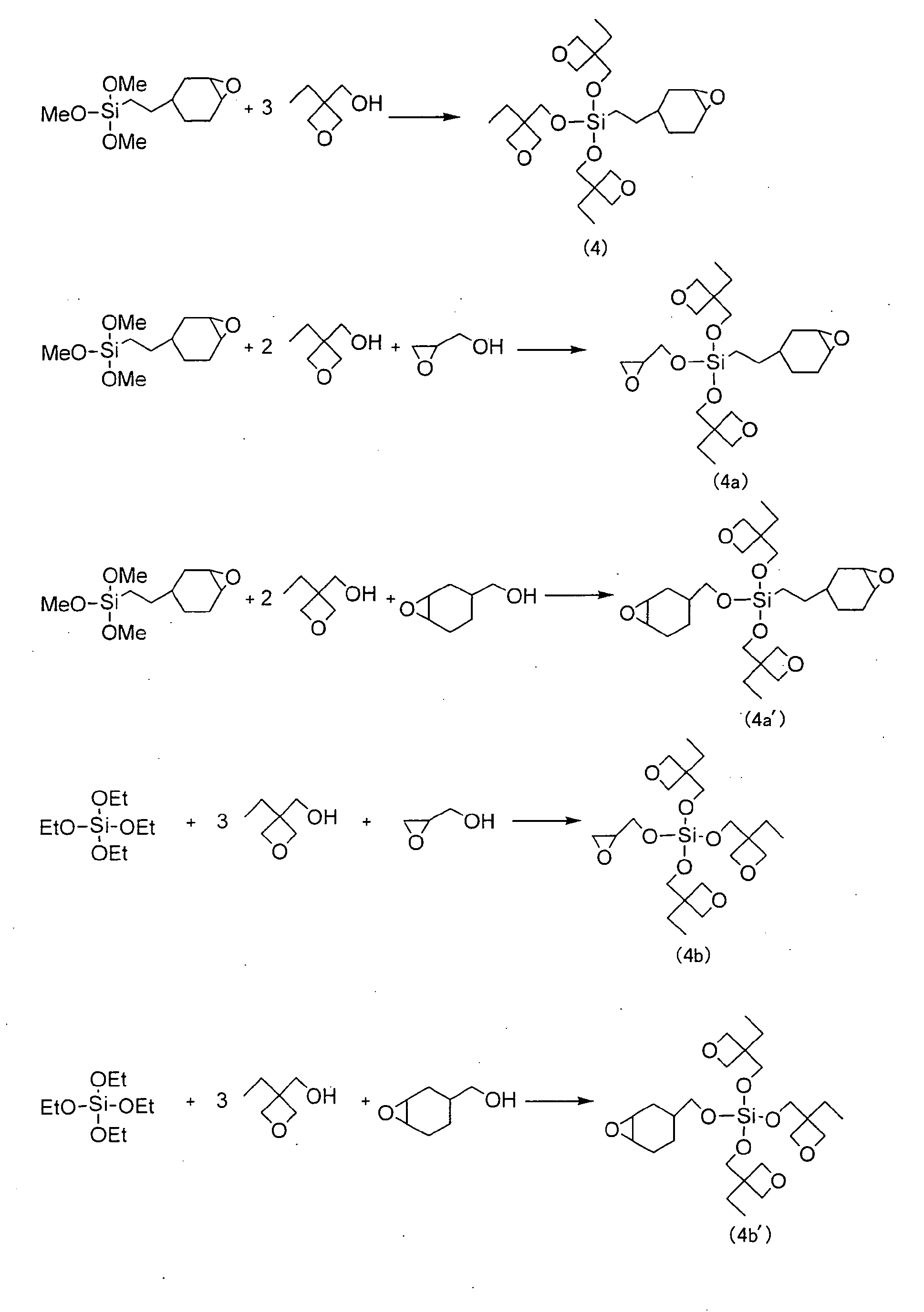

The curable composition of the present invention (which may hereinafter be simply referred to as the "composition of the present invention") is a curable composition containing: at least one of the above-mentioned respective oxetane compounds; and a cationic polymerization initiator.
In the composition of the present invention, one of the oxetane compounds may be used alone, or two or more of them may be used in combination.
Next, the cationic polymerization initiator will be described in detail.

### <Cationic polymerization initiator>

The cationic polymerization initiator to be used in the composition of the present invention is a compound capable of generating a Lewis acid or a protonic acid, and examples of the initiator include a photo cationic polymerization initiator, a photo/thermal cationic polymerization initiator, a thermal cationic polymerization initiator, and a protonic acid (Bronsted acid) initiator.

### (Photo cationic polymerization initiator)

The photo cationic polymerization initiator is a compound capable of generating a Lewis acid or a protonic acid acting through light (such as ultraviolet light, ultraviolet laser light, a visible light ray, or infrared light).
Examples of such photo cationic polymerization initiator include: an onium salt type initiator such as a diazonium salt type, iodonium salt type, phosphonium salt type, or sulfonium salt type initiator; a pyridinium salt type initiator; an iron-arene compound type initiator; a sulfonate ester type initiator; and a boron compound. One of them may be used alone, or two or more of them may be used in combination.
Of those, iron-arene complex systems represented by the following general formulae (5) to (7), which are cationic polymerization initiators each having absorption in a visible light region (400 to 500 nm), are suitably used because they perform epoxy polymerization through ligand exchange.

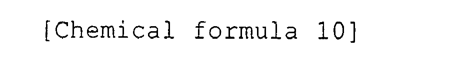

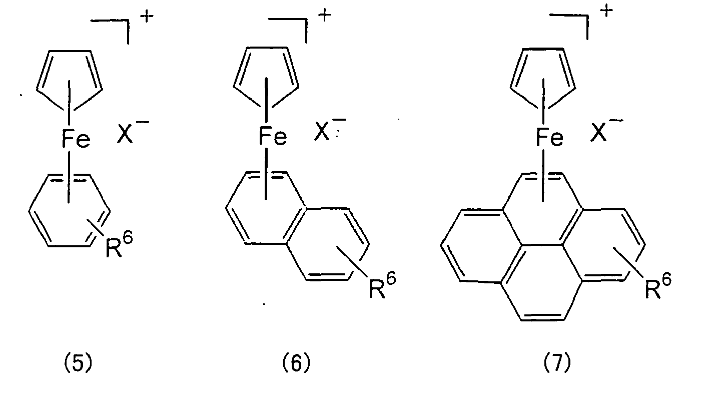

In the formulae (5) to (7), X⁻ represents BF₄⁻, PF₆⁻, AsF₆⁻, or SbF₆⁻, and R⁶ represents an alkyl group.

### (Photo/thermal cationic polymerization initiator)

The photo/thermal cationic polymerization initiator is a compound that is decomposed by light or heat to generate a Lewis acid or a protonic acid.
Examples of such photo/thermal cationic polymerization initiator include: a compound containing at least one sulfonium salt represented by the following formula (8) or (9); a compound containing at least one an onium salt represented by the following formula (10) or (11); and a compound represented by one of the following formulae (12) to (14). One of them may be used alone, or two or more of them may be used in combination.

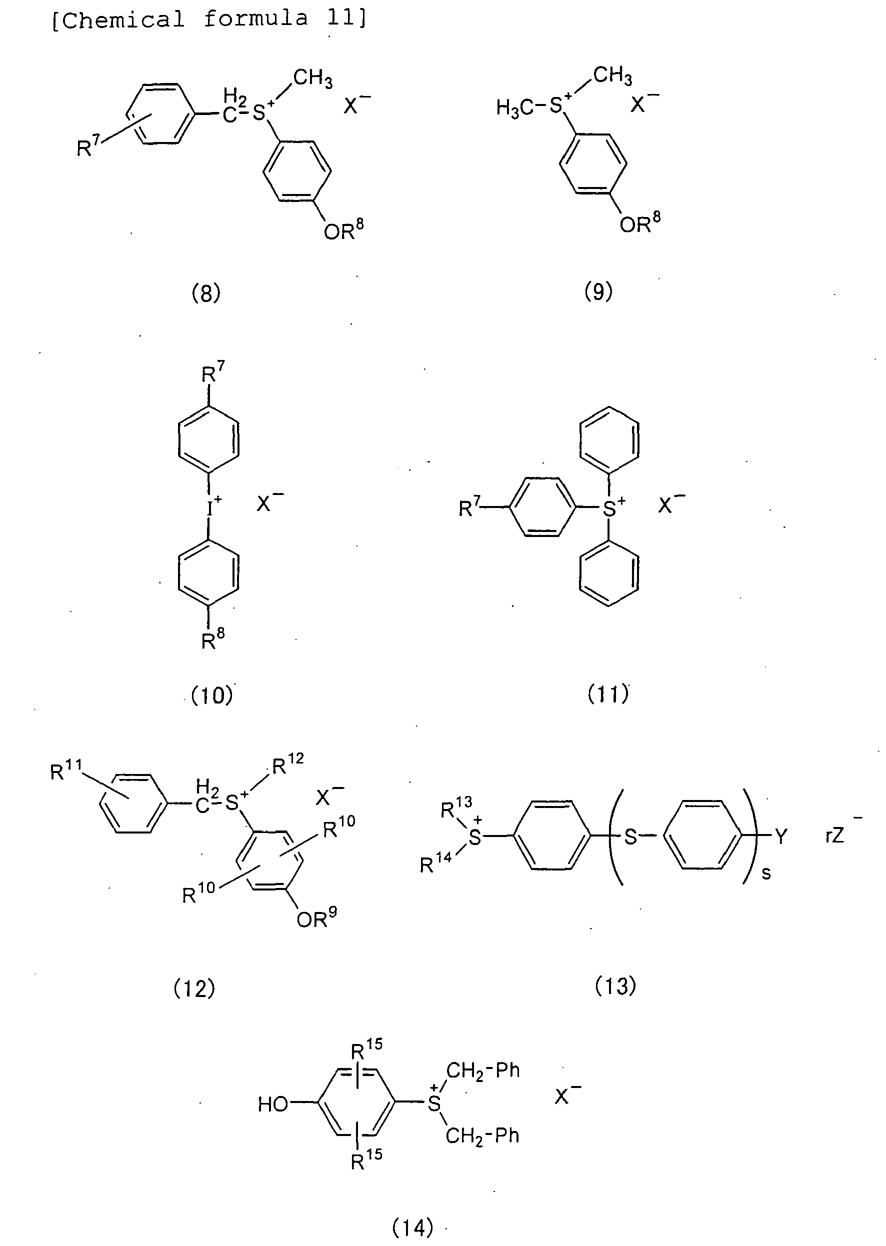

In the formulae (8) to (11), X⁻ has the same meaning as that in each of the formulae (5) to (7), R⁷ represents H, CH₃, a halogen, or NO₂, and R⁸ represents H, CH₃C(O), or CH₃OC(O).
In the formula (12), X⁻ has the same meaning as that in each of the formulae (5) to (7), R⁹ represents H, CH₃, an acetyl group., or a methoxycarbonyl group, R¹⁰'s each independently represent H, a halogen, or an alkyl group having 1 to 4 carbon atoms, R¹¹ represents H, a halogen, or a methoxy group, and R¹² represents an alkyl group having 1 to 4 carbon atoms.
In the formula (13), R¹³ represents an aliphatic group having 1 to 18 carbon atoms, R¹⁴ represents an aliphatic group having 1 to 18 carbon atoms, or a substituted or unsubstituted aromatic group having 6 to 18 carbon atoms, and R¹³ and R¹⁴ may be bound to each other to form a ring.
Y represents a sulfonio group represented by the following formula (15), H, a halogen, a nitro group, an alkoxy group, an aliphatic group having 1 to 18 carbon atoms, a substituted or unsubstituted phenyl group having 6 to 18 carbon atoms, a phenoxy group, or a thiophenoxy group. Z⁻ represents an anion represented by a formula MQₚ or MQₚ₋₁OH (where M represents B, P, As, or Sb, Q represents a halogen atom, and p represents an integer of 4 or 6). r and s each independently represent 1 or 2.

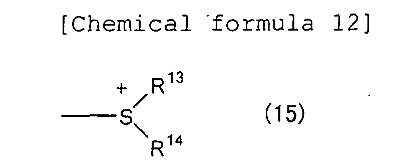

In the formula (15), R¹³ and R¹⁴ each have the same meaning as that in the formula (13).

In the formula (14), X⁻ has the same meaning as that in each of the formulae (5) to (7), and R¹⁵'s each independently represent H or an alkyl group having 1 to 4 carbon atoms.

In addition to the compounds represented by the formulae (8) to (14), an arbitrary onium salt such as a benzyl sulfonium salt or a phosphonium salt can be used as the photo/thermal cationic polymerization initiator. To be specific, a pyrenyl phosphonium salt is preferably used because a pyrenyl methyl cation can be produced with good efficiency.

### (Thermal cationic polymerization initiator)

The thermal cationic polymerization initiator is a compound that is decomposed by heat to generate a Lewis acid or a protonic acid.
Examples of such thermal cationic polymerization initiator include: compounds represented by the following formulae (16) to (19). One of them may be used alone, or two or more of them may be used in combination.

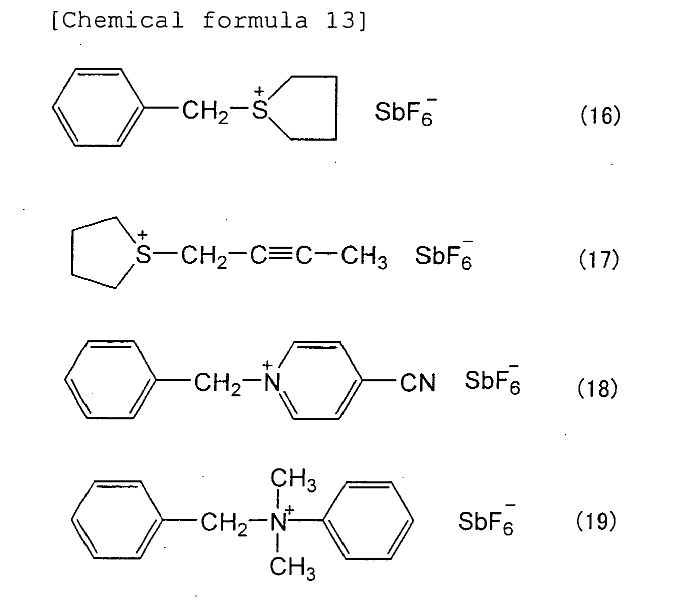

### (Protonic acid (Bronsted acid) initiator)

Examples of the protonic acid (Bronsted acid) initiator include an inorganic acid and an organic acid.
Examples of the inorganic acid include: sulfuric acid; hydrochloric acid; nitric acid; and superacids such as CF₃SO₃H, ClSO₃H, FSO₃H, and HClO₄. One of them may be used alone, or two or more of them may be used in combination.
Examples of the organic acid include CF₃COOH and CCl₃COOH. One of them may be used alone, or two or more of them may be used in combination.

The content of the cationic polymerization initiator is in the range of preferably 0.01 to 20 parts by weight, or more preferably 1 to 5 parts by weight with respect to 100 parts by weight of the oxetane compound. This is because a content in this range provides the composition obtainable in the present invention with good reactivity.

When a photo cationic polymerization initiator is used alone as the cationic polymerization initiator in the composition of the present invention, a cation generated by light reacts with the oxetane compound. In addition, when a photo/thermal cationic polymerization initiator is used alone, a cation generated by light or heat reacts with the oxetane compound. When a thermal cationic polymerization initiator is used alone, a cation generated by heat reacts with the oxetane compound.
On the other hand, when a photo cationic polymerization initiator and a photo/thermal cationic polymerization initiator are used in combination in the composition of the present invention, a cation is generated from part of each of the photo cationic polymerization initiator and the photo/thermal cationic polymerization initiator by light, and reacts with the oxetane compound. Furthermore, the photo/thermal cationic polymerization initiator is decomposed by heat of reaction to generate a cation, whereby a chain reaction occurs. Therefore, the composition obtainable in the present invention is excellent in reactivity, and can be cured even when an energy ray shielding such as a filler is present in the composition. Therefore, the composition of the present invention preferably contains both a photo cationic polymerization initiator and a photo/thermal cationic polymerization initiator.

Since the composition of the present invention contains the oxetane compound and the cationic polymerization initiator, the composition is excellent in reactivity, specifically, cationic polymerizability with respect to light and heat, and has good heat resistance (in particular, no glass transition point is observed at a temperature equal to or lower than 300°C). The reason for this is considered to be as described below. The curing reaction of the oxetane compound of the present invention to be used is advanced by each of light and heat, and the compound has an oxetane ring and an epoxy ring in one molecule. Accordingly, reactivity (in particular, reactivity at an initial stage of polymerization) improves. Furthermore, the oxetane compound of the present invention to be used is a low-molecular weight compound (having a molecular weight of about 600 or less), or is a silane condensate, so functional groups easily react between molecules and a large number of siloxane bonds are formed owing to a crosslinking reaction at the time of curing.
In addition, the composition of the present invention contains the oxetane compound, so the composition eliminates the need for mixing an epoxy resin therein unlike the case where a conventional oxetane compound is used, and eliminates the need for taking workability, compatibility, and the like upon mixing into consideration.

The composition of the present invention preferably contains a Lewis acid compound in addition to the oxetane compound and the cationic polymerization initiator because a reaction velocity can be controlled.
A conventionally known Lewis acid can be used as a Lewis acid, and examples of the conventionally known Lewis acid include: zinc compounds such as ZnCl₂, ZnI₂, and ZnBr₂; tin compounds such as SnCl₂; titanium compounds such as TiCl₄, Ti(OC₂H₅)₄, Ti(OCH(CH₃)₂)₄, and Ti(OC₄H₉)₄; boron compounds such as BCl₃ and BF₃; aluminum compounds such as C₂H₅AlCl₂; and zirconium compounds such as ZrCl₄ and Zr(OC₄H₉)₄. One of them may be used alone, or two or more of them may be used in combination.
Of those, the zinc compounds are preferably used because each of them has a high ability to stabilize a cation, and a reaction velocity can be controlled by using a small amount of each of them. The titanium compounds are also preferably used because each of them is a liquid, and can be easily mixed.

The content of the Lewis acid compound is preferably in the range of 0.01 to 10 parts by weight with respect to 100 parts by weight of the oxetane compound. A content in this range enables a reaction velocity to be controlled with improved appropriateness. The content of the Lewis acid compound is in the range of more preferably 0.1 to 3 parts by weight, or still more preferably 0.1 to 1 part by mass with respect to 100 parts by weight of the oxetane compound because a uniform, transparent cured product can be obtained and some degree of reaction velocity can be maintained.

The composition of the present invention can further contain any other reactive compound.
Suitable examples of the other reactive compound include: an oxetane compound except the oxetane compound according to any one of the first to the fifth aspects of the present invention; a vinyl ether compound; an α,β unsaturated carbonyl compound; and an epoxy compound.

The oxetane compound except the oxetane compound according to any one of the first to the fifth aspects of the present invention is a compound having one or more oxetane rings, or preferably two or more oxetane rings. Examples of the compound include a polyfunctional oxetane compound and an oxetane resin. One of conventionally known polyfunctional oxetane compounds/oxetane resins can be used alone, or two or more of them can be used in combination.
When the composition of the present invention contains the oxetane compound except the oxetane compound according to any one of the first to the fifth aspects of the present invention, the reactivity of the oxetane compound except the oxetane compound according to any one of the first to the fifth aspects of the present invention and the reactivity of additives can be improved. In addition, a viscosity can be adjusted within a desired range.
The content of the oxetane compound except the oxetane compound according to any one of the first to the fifth aspects of the present invention is in the range of preferably 0.1 to 99.9 wt%, or more preferably 30 to 97 wt% with respect to the total amount of the oxetane compounds.

The vinyl ether compound is a compound having one or more vinyl ether groups (CH₂=CH-O-) , or preferably two or more vinyl ether groups. One kind of conventionally known vinyl ether compounds can be used alone, or two or more kinds of them can be used in combination.
When the composition of the present invention contains the vinyl ether compound, the elastic modulus of a cured product can be controlled within a desired range.
The content of the vinyl ether compound is in the range of preferably 0.1 to 99.9 wt%, or more preferably 30 to 97 wt% with respect to the total amount of the oxetane compound according to any one of the first to the fifth aspects of the present invention and the vinyl ether compound.

The α,β unsaturated carbonyl compound is a compound having one or more pairs of carbon-carbon double bond and carbonyl group conjugating with each other. One of conventionally known vinyl ether compounds can be used alone, or two or more of them can be used in combination.
When the composition of the present invention contains the α,β unsaturated carbonyl compound, a cured product can be obtained by radical polymerization and cation polymerization, and the elastic modulus of the cured product can be controlled to fall within a desired range.
The content of the α,β unsaturated carbonyl compound is in the range of preferably 0.1 to 99.9 wt%, or more preferably 30 to 97 wt% with respect to the total amount of the oxetane compound according to any one of the first to the fifth aspects of the present invention and the α,β unsaturated carbonyl compound.

The epoxy compound is a compound having one or more epoxy groups, or preferably two or more epoxy groups. Suitable examples of the compound include an epoxy resin and a low-molecular-weight, polyfunctional epoxy group-containing compound. Examples of the epoxy resin include: a bisphenol A type epoxy resin; a bisphenol F type epoxy resin; a bisphenol S type epoxy resin; a biphenyl type epoxy resin; a naphthalene type epoxy resin; a novolac type epoxy resin; an epoxy resin having a fluorene skeleton; an epoxy resin using a copolymer of a phenol compound and dicyclopentadiene as a raw material; diglycidyl resorcinol; tetrakis(glycidyloxyphenyl)ethane; tris(glycidyloxyphenyl)methane; a glycidyl amine type epoxy resin (such as trisglycidyl aminophenol, triglycidyl aminocresol, or tetraglycidyl xylenediamine); and an alicyclic epoxy resin (such as vinylcyclohexene diepoxide). One kind of them can be used alone, or two or more kinds of them can be used in combination.

In the present invention, the epoxy compound is used in combination with a filler to be described later.
When the composition of the present invention contains the epoxy compound and the filler, the reactivity of the epoxy compound can be improved. In addition, a viscosity can be adjusted depending on the amount of the filler. Furthermore, the physical properties of a cured product can be improved.
The content of the epoxy compound is in the range of preferably 0.1 to 99.9 wt%, or more preferably 30 to 97 wt% with respect to the total amount of the oxetane compound according to any one of the first to the fifth aspects of the present invention and the epoxy compound.

The composition of the present invention can contain, for example, any one of various additives, except the cationically polymerizable compound, such as a thermoplastic resin, a filler, a reaction retardant, an antiaging agent, an antioxidant, a pigment (dye), a plasticizer, a thixotropic agent, a UV absorber, a fire retardant, a solvent, a surfactant (including a leveling agent), a dispersant, a dehydrator, a tackifier, and an antistatic agent as required to the extent that an object of the present invention is not impaired.

Examples of the thermoplastic resin include polyether sulfone, polyether imide, polyether ether ketone, polyphenylene sulfide, and nylon.

Examples of the filler include organic and inorganic fillers having various shapes. Examples of the filler include: various kinds of silica such as fumed silica, calcined silica, precipitated silica, pulverized silica, and molten silica; diatomaceous earth; iron oxide; zinc oxide; titanium oxide; barium oxide; magnesium oxide; calcium carbonate; magnesium carbonate; zinc carbonate; agalmatolite clay; kaolin clay; calcined clay; carbon black; and products obtained by treating them with aliphatic acids, resin acids, urethane compounds, or fatty acid esters.
Of those, silica is preferable because an elastic modulus can be effectively increased.

The content of the filler, which is not particularly limited, is in the range of preferably 1 to 95 wt%, or more preferably 30 to 95 wt% with respect to the entirety of the curable composition when the filler is silica. A silica content in the above range facilitates the adjustment of an elastic modulus in a desired range while excellent curability is maintained.

Examples of the reaction retardant include alcohol-based compounds.

Example of the antiaging agent include a hindered phenol compounds.
Example of the antioxidants include a butylated hydroxytoluene(BHT)and butylated hydroxyanisole(BHA).

Examples of the pigment include: inorganic pigments such as titanium oxide, zinc oxide, ultramarine blue, colcothar, lithopone, lead, cadmium, iron, cobalt, aluminum, hydrochlorides, and sulfates; and organic pigments such as azo pigments, phthalocyanine pigments, quinacridone pigments, quinacridonequinone pigments, dioxazine pigments, anthrapyrimidine pigments, anthanthrone pigments, indanthrone pigments, flavanthrone pigments, perylene pigments, perynone pigments, diketopyrrolo pyrrole pigments, quinonaphthalone pigments, anthraquinone pigments, thioindigo pigments, benzimidazolone pigments, isoindoline pigments, and carbon black.

Examples of the plasticizers include: dioctyl phthalate (DOP) and dibutyl phthalate (DBP); dioctyl adipate and isodecyl succinate; diethylene glycol dibenzoate and pentaerythritol ester; butyl oleate and methyl acetylricinoleate; tricresyl phosphate and trioctyl phosphate; and propylene glycol adipate polyester and butylene glycol adipate polyester. Each of them may be used alone, or two or more of them can be mixed.

Examples of the thixotropic agents include: aearosil (Nippon Aerosil Co., Ltd.), and Disparlon (Kusumoto Chemical Co., Ltd.).
Examples of the tackifiers include: terpene resin, phenol resin, terpene-phenol resin, rosin, and xylene resin.

Examples of the fire retardants include:
chloroalkylphosphate, dimethyl-methyl phosphonate, bromine-phosphorus compound, ammoniumpolyphosphate, neopentylbromide- polyether, and brominated polyether.
   Examples of the antistatic agents include:
   quarternary ammonium salt; and hydrophilic compounds such as polyglycol or ethylene oxide derivatives.

A method of producing the composition of the present invention is not particularly limited. For example, a method can be employed, which involves: loading the above-mentioned respective essential ingredients and arbitrary ingredients into a reaction vessel; and sufficiently kneading the mixture with an agitator such as a mixer under reduced pressure.

The composition of the present invention is used in a wide variety of applications owing to its properties. The composition can find use in applications including: cured products of various heat- and photo-curable resins, specifically, fiber-reinforced composite materials, adhesives, sealing compounds, paints, coating agents, resins for stereo lithography, and the like; printed articles produced by using ink, toner, and the like; and sealants.

### EXAMPLES

Hereinafter, the present invention will be described specifically by showing examples. However, the present invention is not limited to these examples.

### 1. Synthesis of oxetane compounds

### (Example 1-1)

50 g (0.203 mol) of 2-(3,4-epoxycyclohexyl)ethyltrimethoxysilane (A186, manufactured by Nippon Unicar Co., Ltd.) and 70.74 g (0.609 mol) of 3-ethyl-3-(hydroxymethyl)oxetane (OXT-101, manufactured by Toagosei Co., Ltd.) were reacted with each other under reduced pressure by using 0.34 g of tetra-n-butyltitan as an acid catalyst. The reaction was performed by: gradually increasing a temperature from 60°C to 160°C; and stirring the mixture for 15 hours. A reaction rate measured by means of ¹H-NMR was 88.5%, and Oxetane compound 1 according to the first aspect of the present invention represented by the formula (4) was obtained. The molecular weight of Oxetane compound 1 was measured by means of FAB Mass. As a result, m/z = 499.3 [M+H]⁺.

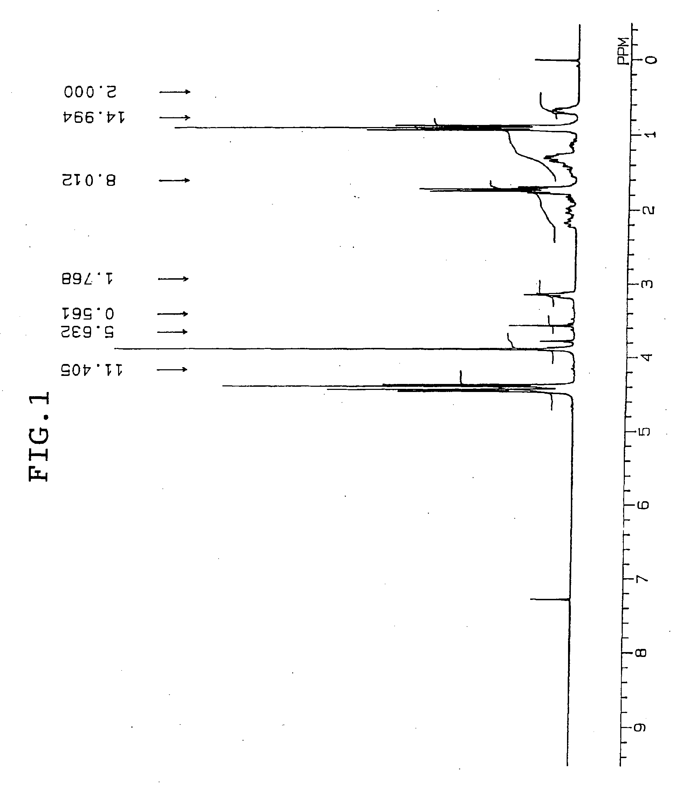

FIG. 1 shows a chart of the ¹H-NMR (CDCl₃) spectrum of Oxetane compound 1 obtained.

### (Example 1-2)

100 g (0.406 mol) of 2-(3,4-epoxycyclohexyl)ethyltrimethoxysilane (A186, manufactured by Nippon Unicar Co., Ltd.) and 141.48 g (1.22 mol) of 3-ethyl-3-(hydroxymethyl)oxetane (OXT-101, manufactured by Toagosei Co., Ltd.) were reacted with each other under reduced pressure at 100°C for 3 hours. A reaction rate measured by means of ¹H-NMR was 88.2%, and Oxetane compound 1 according to the first aspect of the present invention, just like Example 1, was obtained.

### (Example 1-3)

100 g (0.406 mol) of 2-(3,4-epoxycyclohexyl)ethyltrimethoxysilane (A186, manufactured by Nippon Unicar Co., Ltd.), 94.32 g (0.812 mol) of 3-ethyl-3-(hydroxymethyl)oxetane (OXT-101, manufactured by Toagosei Co., Ltd.), and 30.0 g (0.406 mol) of glycidol (GD, manufactured by Daicel Chemical Industries Co., Ltd.) were reacted with one another under reduced pressure at 120°C for 3 hours. A reaction rate measured by means of ¹H-NMR was 85.2%, and Oxetane Compound 2 according to the second aspect of the present invention represented by the formula (4a) was obtained.

### (Example 1-4)

100 g (0.406 mol) of 2-(3,4-epoxycyclohexyl)ethyltrimethoxysilane (A186, manufactured by Nippon Unicar Co., Ltd.), 94.32 g (0.812 mol) of 3-ethyl-3-(hydroxymethyl)oxetane (OXT-101, manufactured by Toagosei Co., Ltd.), and 52.0 g (0.406 mol) of 1,2-epoxy-4-hydroxymethyl-cyclohexane (ETHB, manufactured by Daicel Chemical Industries Co., Ltd.) were reacted with one another under reduced pressure at 120°C for 3 hours. A reaction rate measured by means of ¹H-NMR was 89.5%, and Oxetane Compound 2' according to the second aspect of the present invention represented by the formula (4a') was obtained.

### (Example 1-5)

84.6 g (0.406 mol) of tetraethoxysilane (KBE-04, manufactured by Shin-Etsu Chemical Co., Ltd.), 141.48 g (1.22 mol) of 3-ethyl-3-(hydroxymethyl)oxetane (OXT-101, manufactured by Toagosei CO., Ltd.), and 30.0 g (0.406 mol) of glycidol (GD, manufactured by Daicel Chemical Industries Co., Ltd.) were reacted with one another under reduced pressure at 120°C for 3 hours. A reaction rate measured by means of ¹H-NMR was 89.3%, and Oxetane Compound 3 according to the third aspect of the present invention represented by the formula (4b) was obtained.

### (Example 1-6)

84.6 g (0.406 mol) of tetraethoxysilane (KBE-04, manufactured by Shin-Etsu Chemical Co., Ltd.), 141.48 g (1.22 mol) of 3-ethyl-3-(hydroxymethyl)oxetane (OXT-101, manufactured by Toagosei Co., Ltd.), and 52.0 g (0.406 mol) of 1,2-epoxy-4-hydroxymethyl-cyclohexane (ETHB, manufactured by Daicel Chemical Industries Co., Ltd.) were reacted with one another under reduced pressure at 120°C for 3 hours. A reaction rate measured by means of ¹H-NMR was 91.3%, and Oxetane Compound 3' according to the third aspect of the present invention represented by the formula (4b') was obtained.

2. Preparation and properties of curable composition containing oxetane compound

### (Example 2 and Comparative Example 1)

The respective ingredients of Table 1 below were mixed according to the composition (parts by weight) shown in Table 1 by using an agitator, whereby each composition shown in Table 1 was obtained.
The photo differential scanning calorimetry (photo DSC) of each of the resultant compositions was measured by means of the following method. The dynamic mechanical analysis (DMA) spectrum of a cured product of the composition obtained in Example 2 was measured.

### <Photo DSC>

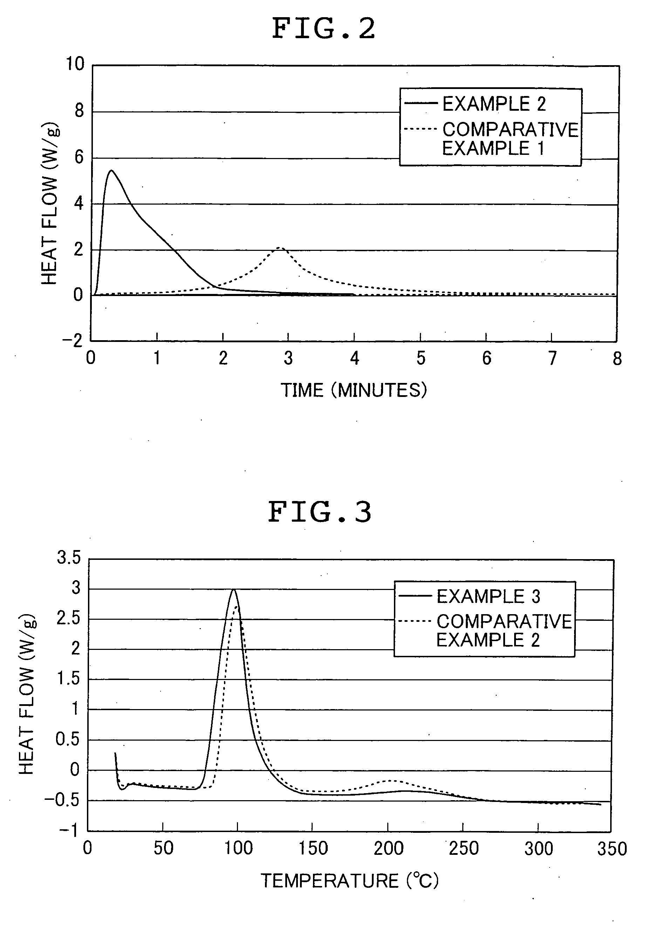

Photo differential scanning calorimetry was performed at 25°C with the aid of a photochemical reaction heat calorimeter (PDC121, manufactured by SII NanoTechnology Inc.) by applying ultraviolet light (365 nm) at a peak irradiance of 10 mW/cm² from an Hg-Xe lamp (200 W). FIG. 2 shows the resultant chart. An integrated value (J/g) for a heat flow (W/g) for 0 to 8 minutes after the irradiation was also calculated. Table 1 shows the results.

### <DMA>

A die was filled with the composition obtained in Example 2, and was then mounted on a belt conveyor type photoirradiation device (S-250-C1, manufactured by Nihon Denti, lamp: MAN250NL (HAN250NL) 3,000 W). Then, each of the front surface and back surface of the die was irradiated with ultraviolet light having a peak illuminance of 516 mW/cm² and an accumulated light amount of 1,988 mJ/cm² twice. After that, the resultant was cured at 100°C for 2 hours and further at 180°C for 3 hours. Thus, a sheet-like test piece of 32 mm long, 12 mm wide and 1 mm thick was obtained.
The resultant test piece was examined for elastic modulus (G') through dynamic mechanical analysis involving applying vibration with a strain of ± 0.01% in a distortion mode at a frequency of 1 Hz by using a dynamic mechanical spectrometer (ARES, manufactured by TA Instruments) in the range of room temperature to 300°C at a rate of temperature increase of 5°C/min. The term "G'" as used herein refers to a storage elastic modulus (Pa).

[Table 1]

**Table 1**

| | Example 2 | Comparative Example 1 |
|---|---|---|
| Oxetane compound 1 | 100 | - |
| Polyfunctional oxetane | - | 100 |
| Photo cationic polymerization initiator 1 | 1 | 1 |
| Photo/thermal cationic polymerization initiator 1 | 1.5 | 1.5 |
| Photo DSC (J/g) | 297 | 171 |

The respective ingredients shown in Table 1 above-mentioned are as shown below.
Oxetane compound 1: Oxetane compound 1 obtained in Example 1-1
Polyfunctional oxetane: Compound represented by the following formula (20), OX-SC, manufactured by Toagosei Co., Ltd., a number average molecular weight of 1,575
Photo cationic polymerization initiator 1: Compound represented by the following formula (21), SP-170, manufactured by Asahi Denka Kogyo KK.
Photo/thermal cationic polymerization initiator 1: Compound represented by the following formula (22), SI-60L, manufactured by Sanshin Chemical Industry Co., Ltd.

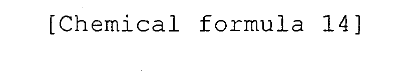

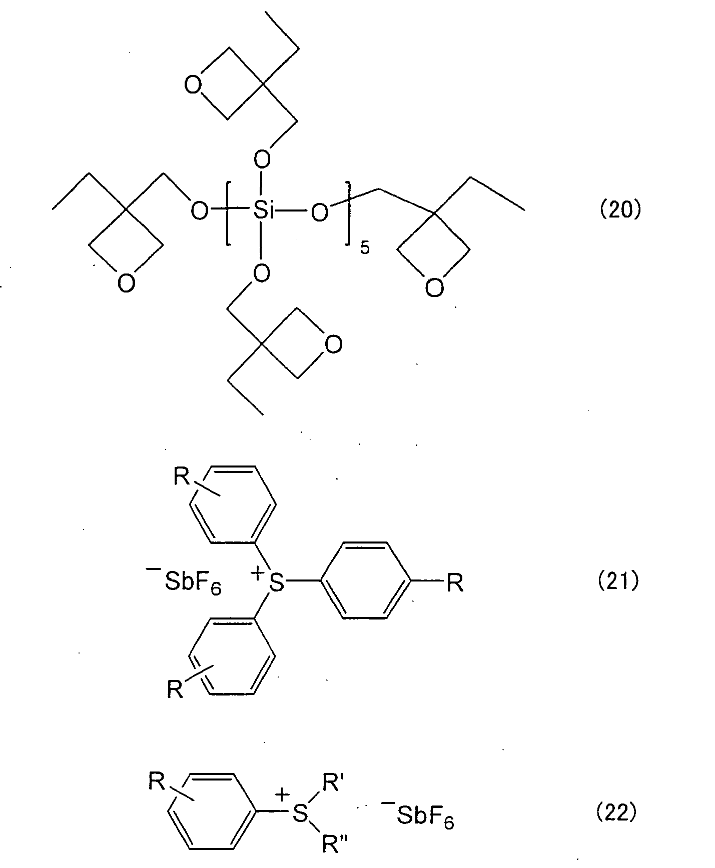

As is apparent from the results shown in FIG. 2 and Table 1, the composition containing Oxetane compound 1 (Example 2) was superior to the composition containing polyfunctional oxetane having no epoxy ring (Comparative Example 1) in reactivity with respect to ultraviolet light (in particular, the reactivity of an initiation reaction).
The dynamic mechanical analysis (DMA) spectrum of a cured product showed that, in a cured product of the composition containing Oxetane compound 1 (Example 2), a glass transition point Tg disappeared in the temperature range of 300°C or lower, and the cured product was excellent in heat resistance.

### (Examples 3 and Comparative Example 2)

The respective ingredients of Table 2 below were mixed according to the composition (parts by weight) shown in Table 2 by using an agitator, whereby each composition shown in Table 2 was obtained. The differential scanning calorie (DSC) of each of the resultant compositions was measured in the following method.

### <DSC>

Differential scanning calorimetry was performed by using a DSC (2920 Modulated DSC, manufactured by TA Instruments) in the range of room temperature to 350°C at a rate of temperature increase of 10°C/min. FIG. 3 shows the resultant chart. An integrated value (J/g) for a heat flow (W/g) in the range of room temperature to 350°C was also calculated. Table 2 shows the results.

[Table 2]

**Table 2**

| | Example 3 | Comparative Example 2 |
|---|---|---|
| Oxetane compound 1 | 100 | - |
| Polyfunctional oxetane | - | 100 |
| Thermal cationic polymerization initiator 1 | 1.5 | 1.5 |
| DSC (J/g) | 514.5 | 463.1 |
| Reaction initiation temperature (°C) | 70.9 | 80.4 |

The respective ingredients shown in Table 2 are as shown below.
Oxetane compound 1: Oxetane compound 1 obtained in Example 1-1
Polyfunctional oxetane: Compound represented by the formula (20), OX-SC, manufactured by Toagosei Co., Ltd., a number average molecular weight of 1,575
Thermal cationic polymerization initiator 1: CP-77, manufactured by Asahi Denka Kogyo KK.

As is apparent from the results shown in FIG. 3 and Table 2, the composition containing Oxetane compound 1 (Example 3) had low reaction initiation temperature, was superior to the composition containing polyfunctional oxetane having no epoxy ring (Comparative Example 2) in reactivity with respect to heat.

### (Examples 4-1 to 4-4)

The respective ingredients of Table 3 below were mixed according to the composition (parts by weight) shown in Table 3 by using an agitator, whereby each composition shown in Table 3 was obtained.
The photo differential scanning calorie (photo DSC) of each of the resultant compositions was measured by means of the following method, and the dynamic mechanical analysis (DMA) spectrum of a cured product of the composition obtained was measured.

### <Photo DSC>

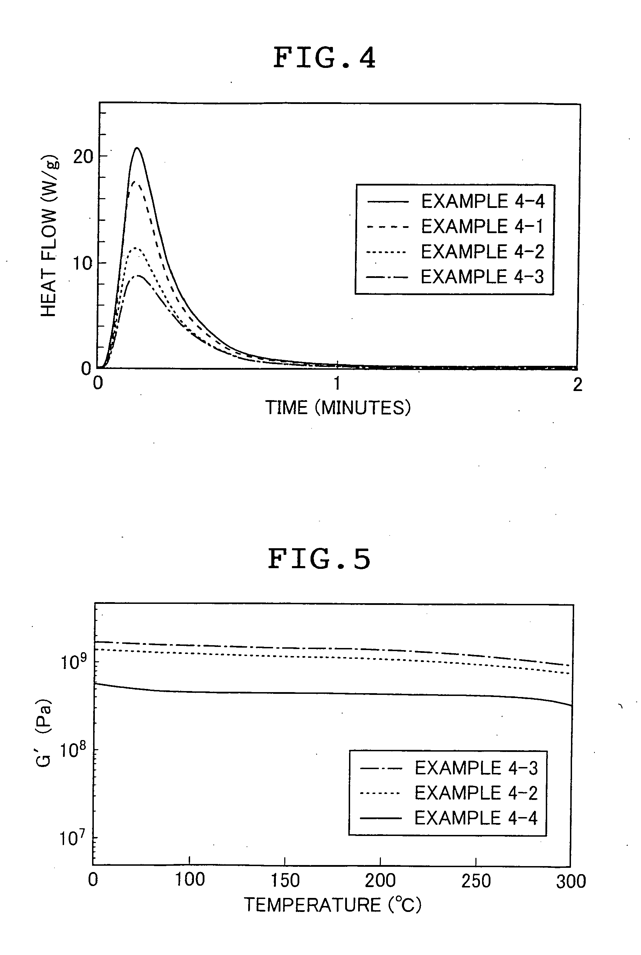

Photo DSC was performed in the same manner as in each of Example 2 and Comparative Example 1. FIG. 4 shows the resultant chart.

### <DMA>

A dynamic mechanical analysis (DMA) was performed in the same manner as in Example 2 except that postcuring at 100°C for 2 hours and further at 180°C for 2 hours was performed after the application of ultraviolet light instead of postcuring at 100°C for 2 hours and further at 180°C for 3 hours. FIG. 5 shows the spectra of the resultant storage elastic moduli (G') for Examples 4-2 to 4-4.

[Table 3]

**Table 3**

| | Example 4-1 | Example 4-2 | Example 4-3 | Example 4-4 |
|---|---|---|---|---|
| Oxetane compound 1 | 80 | 60 | 50 | 100 |
| Silica | 20 | 40 | 50 | |
| Photo cationic polymerization initiator 1 | 1 | 1 | 1 | 1 |
| Photo/thermal cationic polymerization initiator 2 | 1.5 | 1.5 | 1.5 | 1.5 |

The respective ingredients shown in Table 3 are described below.
Oxetane compound 1: Oxetane compound 1 obtained in Example 1-2
Silica: FUSELEX, manufactured by TATSUMORI
Photo cationic polymerization initiator 1: Compound represented by the formula (21), SP-170, manufactured by Asahi Denka Kogyo KK.
Photo/thermal cationic polymerization initiator 2: Compound represented by the formula (22), SI-80L, manufactured by Sanshin Chemical Industry Co., Ltd.

As is apparent from the results shown in Figs. 4 and 5, each of the compositions containing Oxetane compound 1 and silica (Examples 4-1 to 4-3) had the comparable reactivity of Oxetane compound 1 to that of the composition containing Oxetane compound 1 and no silica (Example 4-4), and had the higher storage elastic modulus than that of the composition containing Oxetane compound 1 and no silica.

### (Examples 5-1 to 5-6)

The respective ingredients of Table 4 below were mixed according to the composition (parts by weight) shown in Table 4 by using an agitator, whereby each composition shown in Table 4 was obtained.
The dynamic mechanical analysis (DMA) spectrum of a cured product of each of the resultant compositions was measured in the same manner as in Example 2. Table 4 shows values for storage elastic modulus (G') at 50°C.

[Table 4]

**Table 4**

| | Example 5-1 | Example 5-2 | Example 5-3 | Example 5-4 | Example 5-5 | Example 5-6 |
|---|---|---|---|---|---|---|
| Oxetane compound 1 | 30 | 30 | 30 | 30 | 50 | 50 |
| Silica | 40 | 40 | 40 | 40 | | |
| Epoxy compound | 30 | | | | | |
| Epoxy resin | | 30 | | | | |
| Oxetane resin | | | 30 | | 50 | |
| Polyfunctional oxetane | | | | 30 | | 50 |
| Photo cationic polymerization initiator 1 | 1 | 1 | 1 | 1 | 1 | 1 |
| Light-heat cationic heat polymerization initiator 1 | 1.5 | 1.5 | 1.5 | 1.5 | 1.5 | 1.5 |
| G' (Pa) | 2.43 × 10⁹ | 2.12 × 10⁹ | 1.53 × 10⁹ | 1.46 × 10⁹ | 6.61 × 10⁸ | 6.03 10⁸ |

The respective ingredients shown in Table 4 are described below.
Oxetane compound 1: Oxetane compound 1 obtained in Example 1-2
Silica: FUSELEX, manufactured by TATSUMORI Co., Ltd.
Epoxy compound: Compound represented by the following formula (23), CY-179, manufactured by Huntsman Advanced Materials Co., Ltd.
Epoxy resin: Bisphenol A type epoxy resin represented by the following formula (24), YD-128, manufactured by Tohto Kasei Co., Ltd.
Oxetane resin: Oxetane resin represented by the following formula (25), OXT-121, manufactured by Toagosei Co., Ltd.
Polyfunctional oxetane: Compound represented by the formula (20), OX-SC, manufactured by Toagosei Co., Ltd., a number average molecular weight of 1,575
Photo cationic polymerization initiator 1: Compound represented by the formula (21), SP-170, manufactured by Asahi Denka Kogyo KK.
Photo/thermal cationic polymerization initiator 1: Compound represented by the formula (22), SI-60L, manufactured by Sanshin Chemical Industry Co., Ltd.

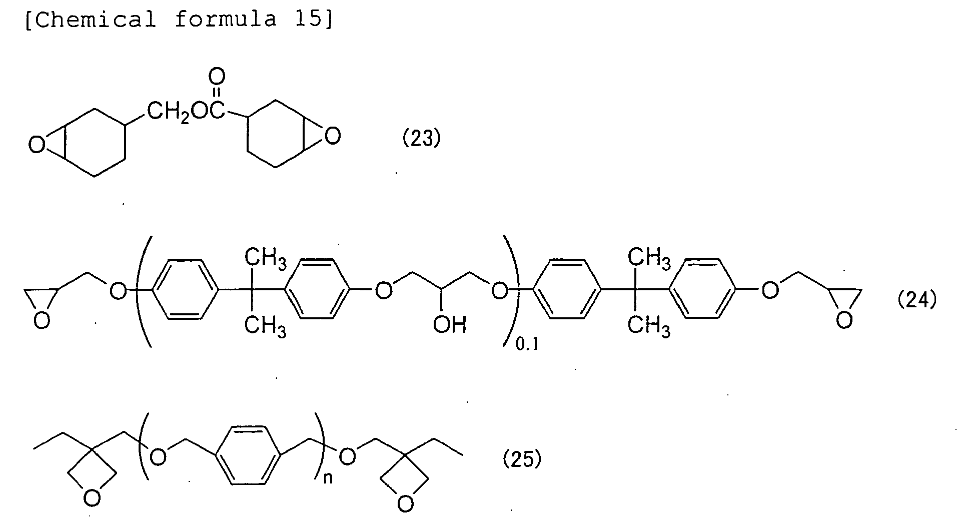

In the formulae, n represents an integer of 1 to 3.

As is apparent from the results shown in Table 4, an increase in elastic modulus of a cured product was attained by adding an epoxy compound, an epoxy resin, an oxetane resin, or an oxetane compound in addition to Oxetane compound 1 (The storage elastic modulus (G') at 50°C of a cured product of the composition in Example 4-4 not added with any epoxy compound or the like was 5.83 × 10⁸ Pa (It should be noted that a time for postcuring was different.). See FIG. 5.). In particular, the elastic modulus of a cured product of each of the compositions further containing silica (Examples 5-1 to 5-4) was more excellent.

### (Examples 6-1 to 6-3)

The respective ingredients of Table 5 below were mixed according to the composition (parts by weight) shown in Table 5 by using an agitator, whereby each composition shown in Table 5 was obtained.
The dynamic mechanical analysis (DMA) spectrum of a cured product of each of the resultant compositions was measured in the same manner as in Example 2 and Comparative Example 1. Table 5 shows values for storage elastic modulus (G') at 50°C.

[Table 5]

**Table 5**

| | Example 6-1 | Example 6-2 | Example 6-3 |
|---|---|---|---|
| Oxetane compound 1 | 100 | 50 | 50 |
| Vinyl ether compound 1 | | 50 | |
| α,β unsaturated carbonyl compound 1 | | | 50 |
| Photo cationic polymerization initiator 1 | 1 | 1 | 1 |
| Photo/thermal cationic polymerization initiator 1 | 1.5 | 1.5 | 1.5 |
| G' (Pa) | 5.83 × 10⁸ | 6.86 × 10⁸ | 7.61 × 10⁸ |

The respective ingredients shown in Table 5 are described below.
Oxetane compound 1: Oxetane compound 1 obtained in Example 1-2
Vinyl ether compound 1: Compound represented by the following formula (26), CHDVE, manufactured by Nippon Carbide Industries Co., Ltd.
α,β unsaturated carbonyl compound 1: Compound represented by the formula (27), M-309, manufactured by Toagosei Co., Ltd.
Photo cationic polymerization initiator 1: Compound represented by the formula (21), SP-170, manufactured by Asahi Denka Kogyo KK.
Photo/thermal cationic polymerization initiator 1: Compound represented by the formula (22), SI-60L, manufactured by Sanshin Chemical Industry Co., Ltd.

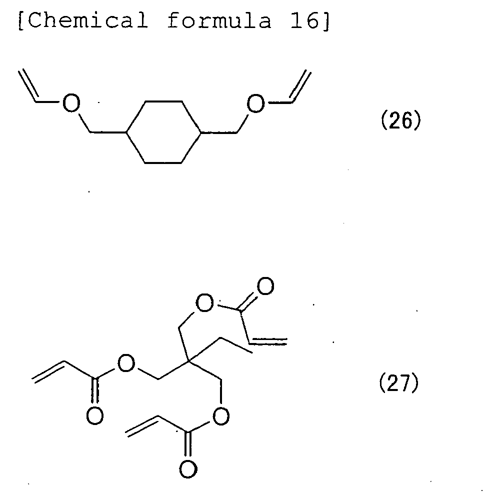

As is apparent from the results shown in Table 5, an increase in elastic modulus of a cured product was attained by adding a vinyl ether compound or an α,β unsaturated carbonyl compound in addition to Oxetane compound 1.

## Claims

1. An oxetane compound producible by a reaction between a silane compound having an epoxy group and an alkoxysilyl group, and a compound having an oxetane ring and an active hydrogen group.

2. An oxetane compound producible by a reaction among a silane compound having an epoxy group and an alkoxysilyl group, a compound having an oxetane ring and an active hydrogen group, and a compound having an epoxy group and an active hydrogen group.

3. An oxetane compound producible by a reaction among a silane compound having an alkoxysilyl group, a compound having an oxetane ring and an active hydrogen group, and a compound having an epoxy group and an active hydrogen group.

4. An oxetane compound producible by a reaction between a silane compound having an oxetane ring and an alkoxysilyl group, and a compound having an epoxy group and an active hydrogen group.

5. An oxetane compound producible by a reaction among a silane compound having an oxetane ring and an alkoxysilyl group, a compound having an oxetane ring and an active hydrogen group, and a compound having an epoxy group and an active hydrogen group.

6. A curable composition containing: at least one of the oxetane compounds according to any one of claims 1 to 5; and a cationic polymerization initiator.

7. The curable composition according to claim 6, further containing a filler.

8. The curable composition according to claim 7, in which the filler is silica.

9. The curable composition according to claim 8, in which a content of the silica is 1 to 95 wt%.

10. The curable composition according to any one of claims 6 to 9, further containing an oxetane compound except the oxetane compound according to any one of claims 1 to 5.

11. The curable composition according to any one of claims 6 to 10, further containing a vinyl ether compound.

12. The curable composition according to any one of claims 6 to 11, further containing an α,β unsaturated carbonyl compound.

13. The curable composition according to any one of claims 7 to 12, further containing an epoxy compound.
